# EUROPEAN PATENT APPLICATION

(11) **EP 4 451 235 A1**
(43) Date of publication of application: **23.10.2024**
(21) Application number: 24161613.5
(22) Date of filing: 05.03.2024
(51) Int. Cl.: G06V 30/148, G06V 30/18

(54) **TEXT RECOGNIZER USING CONTOUR SEGMENTATION**

(30) Priority: 18.04.2023 US 202318302493
(71) Applicant: The Boeing Company, Arlington, VA 22202 (US)
(72) Inventor: CHOPRA, Seema, Arlington, 22202 (US); KRISHNAN, Aravindan, Arlington, 22202 (US); BACHILI, Vinod Kumar Reddy, Arlington, 22202 (US); KUMAR, Karthik Kalyan, Arlington, 22202 (US)
(74) Representative: Bryn-Jacobsen, Caelia

(57) **Abstract**

Examples of a computing device for text recognition is provided. The computing device comprises a processor coupled to a storage medium that stores instructions, which upon execution by the processor, cause the processor to receive a data file comprising an image, identify at least one contour in the image, partition the at least one contour into a plurality of segments, and identify a text character in each segment of the plurality of segments.

## Description

### FIELD

The field of invention relates generally to text recognition and, more specifically, text recognition using contour detection.

### BACKGROUND

The digitization of real documents is often performed for various purposes, including business and personal workflows. The digitization process converts a real document into a digital image file, typically through the use of scanning equipment. The scanned image data generally represents the real document as pure image data - i.e., the scanned image data do not initially contain any text data even if text is present on the real document. To enable more functionality, text recognition processes can be performed to extract text from images into a machine-readable format that can be edited, searched, manipulated, etc. through the use of text editors and word processing applications. Such processes are typically implemented as automated electronic algorithms that use machine vision techniques to identify text present in the image data and to perform text classification to convert the identified text into machine-readable text data.

### SUMMARY

Examples of a computing device for text recognition is provided. The computing device comprises a processor coupled to a storage medium that stores instructions, which, upon execution by the processor, cause the processor to receive a data file comprising an image, identify at least one contour in the image, partition the at least one contour into a plurality of segments, and identify a text character in each segment of the plurality of segments.

Another aspect provides for a method for text recognition. The method comprises receiving a data file comprising an image, identifying at least one contour in the image, partitioning the at least one contour into a plurality of segments, and identifying a text character in each segment of the plurality of segments.

Another aspect provides for a computing device for text recognition. The computing device comprises a processor coupled to a storage medium that stores instructions, which, upon execution by the processor, cause the processor to receive a data file comprising an image, identify a plurality of contours in the image, filter the plurality of contours to remove contours corresponding to non-text portions of the image, partition each of the remaining contours in the plurality of contours into one or more segments, identify a text character in each partitioned segment using a text classification machine learning model, and output the identified text characters.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows a schematic view of an example computing system for text recognition.
FIGS. 2A and 2B show an example text recognition framework for extracting text from an image.
FIG. 3 shows an example text recognition process for a word in an image.
FIG. 4 shows a flow diagram of an example method for text recognition using contour detection and segmentation.
FIG. 5 shows a schematic view of an example computing environment that can enact one or more of the methods and processes described herein.

### DETAILED DESCRIPTION

Current text recognition solutions lack robustness and often excel only when dealing with documents and text of specific formats. Generally, such solutions are designed to perform well on text with clear, crisp outlines and regularly spaced characters, which is typical of modern printed documents. However, the accuracy of these solutions falls when the quality of the image to be analyzed deviates from the expected format, such as text of different fonts, sizes, and clarity. For example, documents with smudged and/or handwritten text can be difficult to convert using current text recognition solutions. Such use cases often involve older documents and/or technical documents. Most current text recognition solutions rely on techniques that extract text on a character-by-character basis using optical recognition and computer vision techniques to isolate the characters by detecting white spaces between said characters. However, such solutions are ineffective for certain types of text. For example, overlapping characters - i.e., characters with contours that are contiguous within a predetermined threshold - can be difficult to parse using such solutions. For the use cases described above, overlapping characters can be a common occurrence, and current text recognition solutions fail to provide an adequate level of accuracy in such cases.

In view of the observations above, examples of text recognition methodologies utilizing contour detection and segmentation are provided. A robust text recognizer can be implemented using various machine vision and/or machine learning techniques to extract text of varying quality and characteristics from images, including text containing overlapping characters. The presence of overlapping characters on scanned documents can be due to various reasons, including handwritten text, smudgy text, certain font types, etc. The text recognizer can be implemented using various contour detection and segmentation techniques to identify and parse text from images. Such implementations enable text recognition for both overlapping and non-overlapping characters.

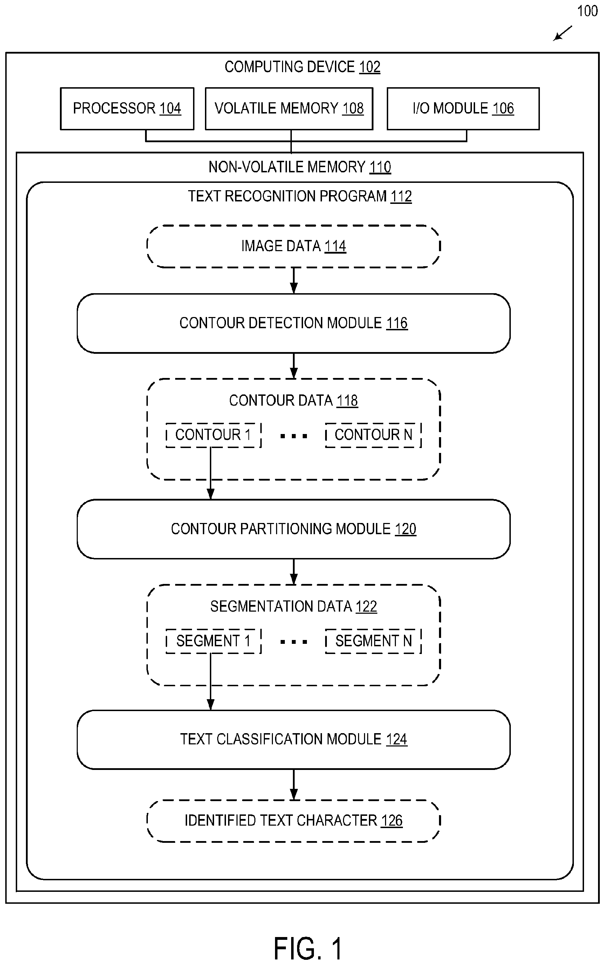

FIG. 1 shows a schematic view of an example computing system 100 for text recognition. The computing system 100 includes a computing device 102. The computing device 102 includes a processor 104 (e.g., central processing units, or "CPUs"), an input/output (I/O) module 106, volatile memory 108, and non-volatile memory 110. The different components are operatively coupled to one another. The non-volatile memory 110 stores a text recognition program 112, which contains instructions for the various software modules described herein for execution by the processor 104.

Upon execution by the processor 104, the instructions stored in the text recognition program 112 cause the processor 104 to initialize the text recognition process, which includes receiving image data 114. The image data 114 can be received, or provided, through various means. In some implementations, the image data 114 is received as a file from an external source, such as a remote device. In other implementations, the image data 114 is provided from a local source, such as retrieved from local storage or a local image scanning device. Files of different formats can be converted into an appropriate image format for use by the text recognition program 112. For example, in some implementations, a file in a portable document format (.pdf), standardized as ISO 32000, is converted to another format before it is utilized by the text recognition program 112.

The text recognition program 112 includes a contour detection module 116 for generating contour data 118 from the image data 114. The contour data 118 can be represented in various ways. In some implementations, the contour data 118 describes one or more contours identified by the contour detection module 116 for a given image from the image data 114. Each contour generally represents a character, multiple characters, or a non-text artifact found in the given image. In some implementations, a filtering process is applied to remove non-text contours from the contour data 118. A contour representing multiple characters can indicate the presence of overlapping characters.

The contour detection module 116 can be implemented in various ways. In some implementations, the contour detection module 116 utilizes a threshold contour detection algorithm for identifying one or more contours in a given image, such as an image from the image data 114, by finding a group of pixels that is spatially contiguous within a predetermined spatial threshold. Contiguous pixels can be determined by finding and grouping pixels above a value threshold, which indicates non-white space pixels, that are in proximity to another pixel above the value threshold that is in the same group. For example, in some implementations, the image to be analyzed from the image data 114 is a grayscale image, or converted into a grayscale image, and the value of a pixel indicates its grayscale value. A contour detection algorithm can be implemented to scan the image to find a pixel satisfying a value threshold. From that pixel, other pixels satisfying the value threshold within a proximity threshold are added to the pixel group. The proximity threshold for the determination of such pixels can be based on spatial distance, which can vary depending on the application. In some implementations, the proximity threshold is one pixel. In such cases, two pixels are contiguous if they are directly adjacent to each other. The process iterates until no new pixel is found, and the pixel group are determined to be a contour. The algorithm can then continue scanning the image to determine a different contour.

The text recognition program 112 includes a contour partitioning module 120 for generating segmentation data 122 from a contour in the contour data 118. The segmentation data 122 can be represented in various ways. In some implementations, the segmentation data 122 describes one or more segments generated by the contour partitioning module 120 for a given contour. As such, in cases where the contour data 118 includes more than one contour, each contour can be partitioned to generate a different set of segmentation data, with each set of segmentation data describing one or more segments. Each segment generally represents a text character in a given contour. As such, segmentation data 118 containing more than one segment can represent a contour with multiple characters, such as a contour representing overlapping characters.

The contour partitioning module 120 can be implemented in various ways. In some implementations, the contour partitioning module 120 generates a bounding box for each contour where said contour is inscribed in the bounding box. The contour partitioning module 120 can partition a contour by dividing its bounding box based on a predetermined pixel width value. For example, the bounding box can be divided into a plurality of sub-bounding boxes, which partitions the contour into a plurality of segments with each segment having a predetermined pixel width value. The predetermined pixel width value can correspond to a character pixel width determined for a given image. As such, each segment corresponds to a separate text character.

The character pixel width can be determined in many different ways. In some implementations, a contour with a bounding box having the smallest pixel width value is used to determine the character pixel width. The pixel width value of said bounding box can be compared to its pixel height value, and the width-to-height ratio can be used to infer whether the bounding box represents a single character. In some implementations, a bounding box having a width-to-height ratio of less than one can represent a single character. Multiple predetermined pixel width values can be utilized - e.g., bounding boxes of different heights can represent text of different font sizes for a given image. In such cases, the choice of which predetermined pixel width value to utilize for a given bounding box can depend on the pixel height value of said bounding box. For examples, the same predetermined pixel width value can be used for contours having similar pixel height values. Multiple predetermined pixel width values can be defined based on a width-to-height ratio of a bounding box associated with an initial predetermined width value. Based on the width-to-height ratio of the bounding box associated with an initial predetermined pixel width value, a different predetermined pixel width value can be determined for another contour having a different height from said bounding box such that the width-to-height ratios remain similar. As can readily be appreciated, such algorithms can exclude bounding boxes with width-to-height ratios that suggest the relevant contours represent multiple characters, such as in the case of overlapping characters.

The text recognition program 112 includes a text classification module 124 for generating an identified text character 126 from a segment in the segmentation data 122. A text character can be a symbol, a number, a letter, etc. A set of text characters can be defined for any given alphabet. The text classification module 124 can be implemented to identify a text character 126 for each segment in the segmentation data 122. As described above, multiple sets of segmentation data can be provided in cases where more than one contour is detected. The text classification module 124 can be implemented to generate an identified text character 126 for each segment in the sets of segmentation data.

The text classification module 124 can be implemented in various ways. In some implementations, the text classification module 124 includes a machine learning model. The machine learning model can be implemented for image classification that takes each segment image and output a corresponding predicted text character. The machine learning model can be designed to output predictions in accordance with a predefined set of possible classifications corresponding to a set of possible text characters. For example, a set of thirty-six characters can be defined to represent ten Arabic numbers and twenty-six letters of the Latin alphabet. Any other set can be defined for one or more alphabets. Various types of machine learning architectures can be utilized, including but not limited to convolutional neural networks (CNNs) and residual networks (ResNets). The machine learning model can be trained for character text classification. In some implementations, the machine learning model is trained using training data that includes images of a predefined set of text characters. The training data can also include images of transformed text characters. Various transformations and logical operations can be applied to produce training image data containing multiple variations of a given text character. Examples of transformations include but are not limited to stretching, scaling, and skewing. Other variations of training data can also be implemented. For example, training data with text characters of different fonts can be utilized.

FIG. 1 describes a process for generating an identified text character for a given input image. The process can be implemented as part of a general framework for extracting text from the given input image. The framework can include additional or alternative steps. For example, the process for generating an identified text character can be repeated until all text in the given image is identified, and a text appending step can be implemented to generate words from the identified text characters. In some implementations, the framework includes a contour filtering step that removes non-text contours generated during the contour detection process.

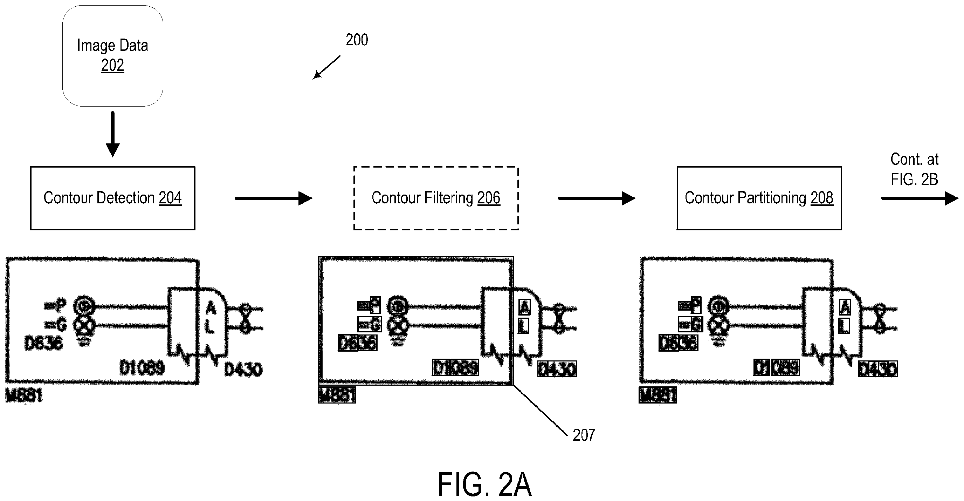

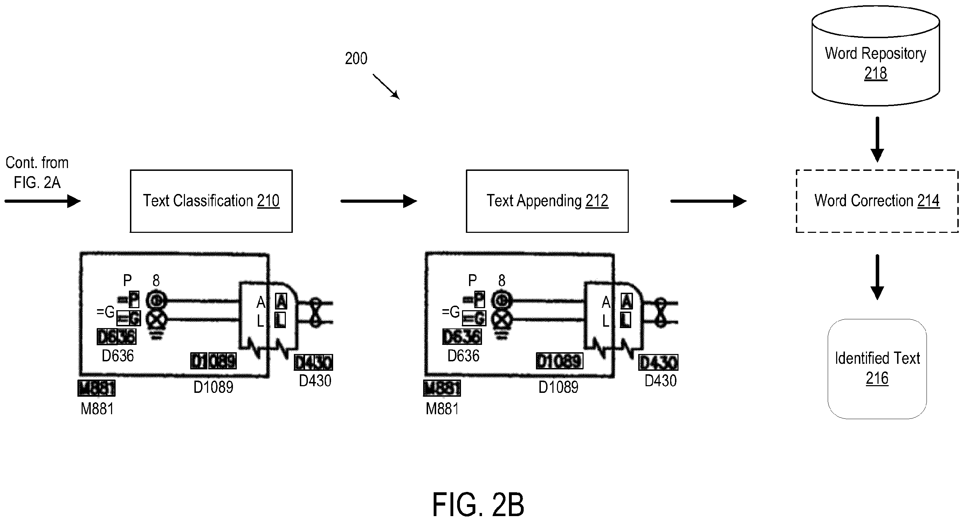

FIGS. 2A and 2B show an example text recognition framework 200 for extracting text from an image. It would be appreciated that the various components illustrated in FIGS. 2A-2B such as bounding boxes and contours are not drawn to scale. Framework 200 can be implemented as a robust text recognizer that can extract text from various types of documents. For example, in addition to printed documents containing large amounts of formatted text, the framework 200 can extract text from technical documents such as wiring diagrams. The framework 200 starts with image data 202 that can be provided through various means. For example, the image data 202 can be provided from a remote or local source. In some implementations, the image data 202 is provided by an image scanning device. The image data 202 can also be an image converted from a different file format.

The framework 200 includes a contour detection step 204 that identifies one or more contours in the image data 202, where each contour generally represents a character, multiple characters, or a non-text artifact. The contour detection step 204 can be performed using various processes. In some implementations, the contour detection step 204 performs a threshold contour detection algorithm. The threshold contour detection algorithm can be implemented to detect a contour by finding a group of contiguous pixels. Contiguous pixels can be determined by finding and grouping pixels above a value threshold that are within a proximity threshold to another pixel that is in the same group. Any other contour detection algorithm can also be implemented, including but not limited to edge detection algorithms.

The framework 200 can optionally include a contour filtering step 206 for removing detected contours corresponding to non-text content in the image data 202. In the depicted example, the image data 202 includes an image of a wiring diagram. The contour detection step 204 previously performed can detect contours corresponding to wiring components and symbols and alphanumeric text characters in the wiring diagram. Contours corresponding to wiring components and symbols are non-text content that can be removed from the set of detected contours before text classification is performed.

The contour filtering step 206 can be performed in various ways. In some implementations, dimensions of bounding boxes around the contours are used to determine non-text contours. For example, bounding boxes that are too large or contain width-to-height ratios not typical of text can be classified as non-text content. In the depicted example, bounding box 207 is a large bounding box relative to the size of the image. As such, the contour inscribed in bounding box 207 is likely not text content. Other methods of filtering the contours include manual selection, which prompts a user to select non-text contours to be removed. Another method includes the use of a machine learning model. In some implementations, the machine learning model implemented is trained to recognize text and non-text content using training data associated with a particular application that is industry- or domain-specific. For example, in the depicted example, a machine learning model trained to recognize wiring diagram components and symbols can be implemented to detect text and non-text content for images of wiring diagrams.

The framework 200 includes a contour partitioning step 208 for partitioning a contour into segments that each represent a text character. Partitioning can be performed on each contour by dividing its bounding box, which divides the contour into segments. In some cases, a contour represents a single text character and partitioning is not performed - e.g., the segment is the entire contour. The bounding boxes can be divided in accordance with a predetermined pixel width value. In some implementations, the predetermined pixel width value corresponds to a character pixel width. Multiple predetermined pixel width values can be utilized, such as for example in the case of an image having text of different sizes.

The character pixel width can be determined in many different ways. In some implementations, a contour with a bounding box having the smallest pixel width value, which generally corresponds to a contour representing a single text character, is used to determine the character pixel width. In cases where the image does not contain a contour corresponding to a single text character - e.g., every text character is overlapping with at least one other text character - the width-to-height ratio of a bounding box can be used to determine the character width. For example, as height is typically constant for a given text size, the width-to-height ratios of multiple bounding boxes of similar height can be compared to deduce and estimate the character width.

The framework 200 includes a text classification step 210 where each segment, defined by the partitioned bounding boxes, is analyzed and identified into a text character. A text character can be a symbol, a number, a letter, etc. In some implementations, an alphabet containing possible text characters is defined, and the segments are classified into a text character in the defined alphabet. For example, a set of thirty-six characters can be defined to represent ten Arabic numbers and twenty-six letters of the Latin alphabet. The character text classification process can be performed in various ways. In some implementations, a machine learning model is implemented to perform the character text classification. Any machine learning architecture can be utilized for character text classification, including CNNs and ResNets. Training of such models can also be performed using various training data sets. For example, training data containing images of text characters and various transformations of such text characters can be used to train the machine learning model.

The framework 200 includes a text appending step 212 for appending the identified text characters. The identified text characters can be appended into "words," which generally represents a set of characters without any space between characters within the set. The appending process can be performed using various algorithms. In some implementations, identified text characters are appended based on the position of the divided bounding box to which their respective segment corresponds. For example, an algorithm can be implemented to scan the image. Upon reaching a bounding box, X and Y positional coordinates of the bounding box can be recorded. Other bounding boxes with X and Y positional coordinates within a predetermined threshold of the initial bounding box can be determined to be within the same "word".

The threshold for determining whether bounding boxes are part of the same "word" can depend on several factors, including character pixel width and the language of the text. For example, for a language with a left-to-right writing system, a left-to-right raster scan of the image can be performed to find an initial bounding box. The scan continues and if another bounding box is found within the same Y coordinate of the initial bounding box, it can be inferred that the text character of the new bounding box is within the same line as the initial bounding box. Bounding boxes with constant Y coordinates and increasing X coordinates (within a threshold) indicate that the text characters of the bounding boxes are part of the same word. If the X coordinate of the new bounding box is less than a character width apart from the X coordinate of the initial bounding box, the text characters of the two bounding boxes can be determined to be in the same "word". The process can repeat with the second bounding box until no other new bounding box is found. As can readily be appreciated, any algorithm can be implemented to perform the steps described above. For example, the X coordinate of the right side of the initial bounding box can be used for comparison to the X coordinate of the left side of the new bounding box. If the difference between the two is less than the character pixel width, the two bounding boxes can be appended. Additionally or alternatively, the algorithm can default to assuming that overlapping characters are part of the same "word".

The framework 200 can optionally include a word correction step 214. Word correction can be performed on the appended words generated in the text appending step 212 using various output identified text 216. In cases where the word correction step 214 is not performed, the appended text is outputted as the identified text 216. In some implementations, natural language processing techniques are implemented to perform word correction. For example, the numeral '0' and the letter `o' can often be misclassified with one another during character text classification. Natural language processing techniques can correct for these errors - e.g., the numeral '0' typically does not appear in between letters and can be corrected to the letter `o' in such cases. Furthermore, natural language processing can be used to correct words based on context from nearby words, such as correcting for sentence structure and grammar. In some implementations, a machine learning model is implemented to perform natural language processing to provide predicted output text.

Additionally or alternatively, a word repository 218 can be utilized for the word correction process. The word repository 218 can initially be empty, with words added as the text recognizer matures over time. In some implementations, the word repository 218 is initialized with one or more dictionaries. Example dictionaries include language dictionaries, technical dictionaries, domain-specific dictionaries, and custom dictionaries. Such implementations can be useful in cases where the framework 200 is often utilized on similar documents. For example, an industry- or domain-specific set of documents can often include reoccurring words that have no meaning in other context. The depicted image in FIGS. 2A and 2B shows a wiring diagram with domain-specific word structure/format - e.g., a letter followed by three numerals. Such words can be added to the word repository as the text recognizer is implemented over time, enabling better word recognition and word correction in future applications.

Another aspect of word correction processes can include the use of confidence scores. During the character text classification process, confidence scores can be calculated based on the predicted accuracy of the character text classification. For example, use of an image classification machine learning model can output a prediction along with a confidence score that describes the accuracy of the prediction. In some implementations, the word correction process outputs predicted words along with a confidence score. Low confidence scores can result from various sources. For example, in implementations where the contours of overlapping characters are partitioned into equal width segments, certain characters may be segmented in a nonideal manner due to having different widths to other characters - e.g., the numeral '1' is often more narrow than other text characters. The confidence scores can be used in the word correction process in various ways. In some implementations, low confidence scores are shown to the user, and correction using user input can be performed. In other implementations, confidence scores are used in combination with natural language processing techniques, such as using a machine learning model, to perform word correction.

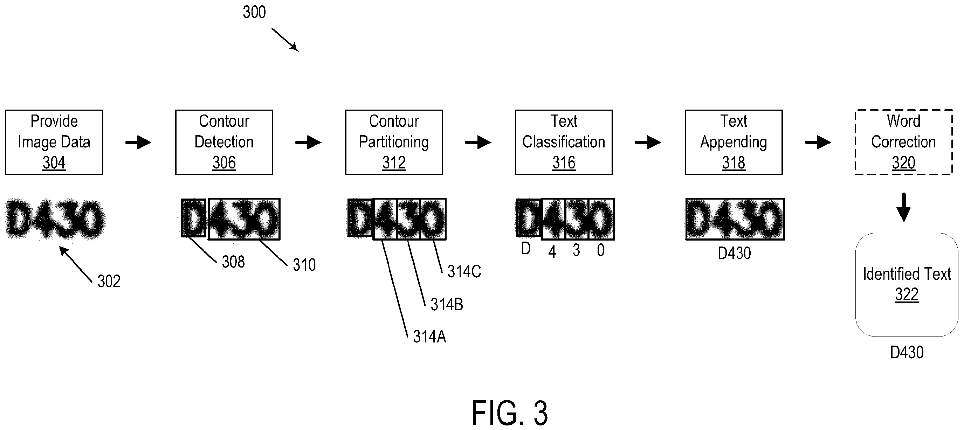

FIGS. 2A and 2B illustrate a general overview of a text recognition process. As a more specific example, FIG. 3 shows an example text recognition process 300 for a word 302 in the image depicted in FIGS. 2A and 2B. It would be appreciated that the various components illustrated in FIG. 3 such as bounding boxes and contours are not drawn to scale. In a first step, image data is provided 304. The image data includes an image containing the word 302. In the depicted example, the word 302 is "D430". Image data can be provided using any of the processes described above.

A contour detection step 306 is performed on the provided image data, and bounding boxes are generated in which the detected contours are inscribed. Contour detection can be performed using any of the processes described above. In the depicted example, two different contours are detected in the word 302, and two corresponding bounding boxes are generated. The character 'D' is non-overlapping with adjacent characters and is represented by the first contour. The remaining characters "430" are overlapping characters and are represented by the second contour. The first bounding box 308 is generated around the first contour, and the second bounding box 310 is generated around the second contour.

A contour partitioning step 312 is performed on the detected contours and the generated bounding boxes. Contour partitioning can be performed using any of the processes described above. In the depicted example, the character 'D' and its associated contour is determined to be a single character, and therefore the first contour is not partitioned. The width of the bounding box 310 of the second contour (relative to its height) indicates that the second contour represents more than one character. As such, the second contour and its bounding box 310 is partitioned. The bounding box 310 is partitioned based a predetermined pixel width value. For example, the pixel width value of the first bounding box 308, which was determined to represent a single character, can be used to divide the second bounding box 310. In the depicted example, the pixel width of the second bounding box 310 was determined to represent three characters, and the second bounding box 310 is partitioned into three sub-bounding boxes 314A-314C. Such determination can be made based on the pixel width of the first bounding box 308 (character pixel width value) and similarity in heights (within a predetermined threshold) of the first and second bounding boxes 308, 310. With this information, the number of characters represented by the second contour can be deduced using the pixel width of the second bounding box 310.

In some examples, an initial recognition of characters on the same document image or related document images may be performed to obtain characters that include white space separation (e.g., one or more white space pixels separating characters). The recognized characters may be used to obtain the predetermined pixel width value prior to addressing contours that include potential overlapping characters (i.e., contours with multiple characters). Further, by capturing width of characters in the same document image, a width-to-height ratio of the recognized characters can be scaled according to a bounding box size with potential overlapping characters.

A text classification step 316 is performed to identify each character in the partitioned bounding boxes. Text classification can be performed using any of the processes described above. In the depicted example, bounding box 308 is identified as the character 'D', sub-bounding box 314A is identified as the character '4', sub-bounding box 314B is identified as the character '3', and sub-bounding box 314C is identified as the character `0'.

A text appending step 318 is performed to append identified characters into words based on their proximity to one another. Text appending can be performed using any of the processes described above. In the depicted example, the spatial locations of the bounding boxes are determined to be within a predetermined threshold and, as such, are appended to form a word. For example, Y coordinates, or the vertical position, of the bounding boxes are determined to be within a predetermined threshold, indicating that the characters are on the same line. Furthermore, there lack any space in the horizontal dimension between the partitioned second contour and, as such, the characters '4', '3', and '0' are determined to be part of the same word. The space between the first bounding box 308 of the first contour and the nearest bounding box 314A is less than a predetermined threshold and, as such, character 'D' is also determined to be part of the same word as the other three characters. In the depicted example, the predetermined threshold is the pixel width of a single character, which is the pixel width of the first bounding box 308.

A word correction step 320 can optionally be performed to correct the appended text. Word correction can be performed using any of the processes described above. In the depicted example, the word 'D430" is determined to be a correct word and is outputted as identified text 322.

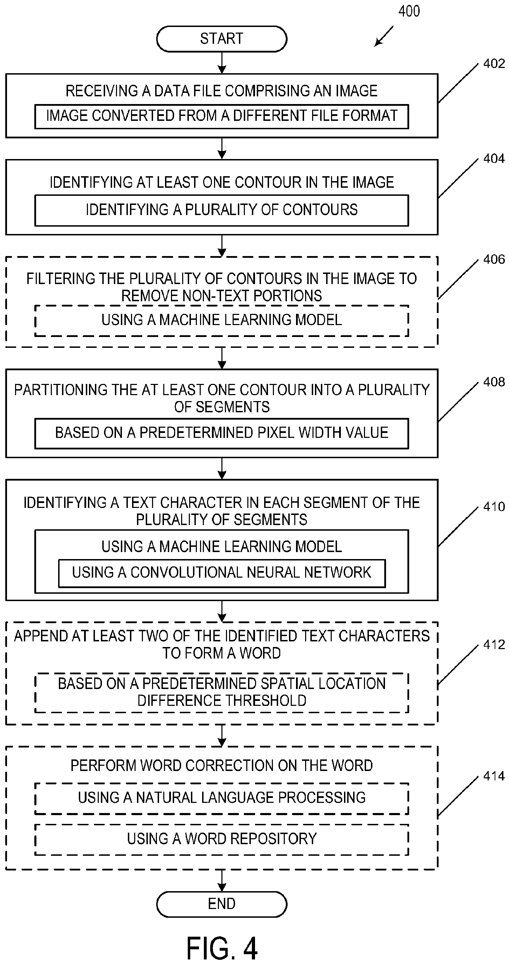

FIG. 4 shows a flow diagram of an example method 400 for text recognition using contour detection and segmentation. At step 402, the method 400 includes receiving a data file comprising an image.

At step 404, the method 400 includes identifying at least one contour in the image. In some implementations, a plurality of contours is identified in the image. Identification of contours can be performed in various ways. Example processes include use of a threshold contour detection algorithm. Such processes can be implemented to identify a contour by finding a group of pixels that is spatially contiguous within a predetermined threshold. Contiguous pixels can be determined by first finding a pixel above a value threshold, indicating a non-white space pixel, and adding the pixel to the group. The algorithm then attempts to find other pixels above the value threshold that are within a proximity threshold to a pixel within the group. The process continues until no new pixels are found, and the group of pixels are determined to be a group of contiguous pixels, forming a contour. The proximity threshold can be determined in various ways. The proximity threshold can be based on spatial distance, which can vary depending on the application. The process can repeat for a new group of pixels in the identification of a different contour.

At step 406, the method 400 can optionally include filtering the plurality of contours in the image to remove non-text portions. In cases where multiple contours are identified, a filtering step can be performed to remove contours corresponding to non-text. For example, in technical documents, non-text artifacts can exist, and contours of such artifacts are identified similarly to contours of text portions. Determination of contours corresponding to non-text portions can be performed in many different ways. In some implementations, determination of such contours is provided through user input. In other implementations, a machine learning model is implemented to predict whether the contour represents text. For example, an image of a given contour can be inputted into a text classification convolutional neural network to determine whether the given contour corresponds to a text character. Other types of machine learning models can also be implemented to determine non-text contours.

At step 408, the method 400 includes partitioning the at least one contour into a plurality of segments. The partitioning process can be performed for each contour. In some implementations, partitioning a contour is performed by generating a bounding box in which the contour is inscribed. The bounding box can be divided to partition the contour into a plurality of segments. In some implementations, the bounding box is divided based on a predetermined pixel width value, which can result in segments of equal widths. The predetermined pixel width value can correspond to a character width determined for a given image.

The character width can be determined in many different ways. In some implementations, the bounding box having the smallest pixel width value is used to determine the character width. The pixel width value of the bounding box can also be compared to its height value, and the width-to-height ratio can be used to infer whether the contour in the bounding box represents a single character. In some implementations, a bounding box having a width-to-height ratio of less than one can represent a single character. Multiple predetermined pixel width values can be utilized for a given image. In such cases, the choice of which predetermined pixel width value to utilize for a given contour can depend on the height value of the bounding box in which the contour is inscribed. For examples, the same predetermined pixel width value can be used for bounding boxes having similar height values. By partitioning contours according to the predetermined pixel width of a given character, the characters can be segmented without having any white space separation therebetween (e.g., without any white space pixels between characters).

At step 410, the method 400 includes identifying a text character in each segment of the plurality of segments. In some implementations, identifying a text character in each segment is performed using a character classification machine learning model. The machine learning model can be implemented for image classification that takes each segment image and output a corresponding predicted text character. The machine learning model can be designed to output predictions in accordance with a predefined set of possible classifications corresponding to a set of possible text characters. Various types of machine learning architectures can be utilized, including but not limited to CNNs and ResNets. In some implementations, the machine learning model is trained using training data that includes images of a predefined set of text characters. The training data can also include images of transformed text characters where various logical operations are applied. Examples of transformations include but are not limited to stretching, scaling, and skewing.

At step 412, the method 400 can optionally include appending at least two of the identified text characters to form a word. The appending process can be performed using various algorithms. In some implementations, identified text characters are appended based on a predetermined spatial location difference threshold. For example, the identified text characters can be appended based on the position of the divided bounding box to which their respective segment corresponds. If the spatial difference of the bonding boxes, such as the X coordinates of the bounding boxes, are within a predetermined spatial location difference threshold, the associated identified text characters can be appended. The predetermined spatial location difference threshold can be determined in various ways. In some implementations, the predetermined spatial location difference threshold is the character width. For example, the predetermined spatial location difference threshold can be based on the width of the bounding box containing the smallest width and found to be representative of a single text character.

At step 414, the method 400 can optionally include performing word correction on the word to generate a corrected word. In some implementations, natural language processing techniques are implemented to perform word correction. For example, natural language processing can be used to correct words based on context from nearby words, such as correcting for sentence structure and grammar. In some implementations, a machine learning model is implemented to perform natural language processing to provide predicted output text.

Additionally or alternatively, a word repository can be utilized for the word correction process. In some implementations, the word repository is initially empty, and words are added through user input or automatically as the text recognizer matures over time. In other implementations, the word repository is initialized with one or more dictionaries. Example dictionaries include common dictionaries, technical dictionaries, domain-specific dictionaries, and custom dictionaries. Words can be added to the word repository as the text recognizer implemented matures over time.

Additionally or alternatively, confidence scores can be utilized in the word correction process. During the character text classification process, confidence scores can be calculated based on the predicted accuracy of the character text classification. For example, use of an image classification machine learning model can output a prediction along with a confidence score that describes the accuracy of the prediction. Confidence scores can be used in combination with natural language processing techniques, such as using a machine learning model, to perform word correction. In some implementations, the word correction process outputs predicted words along with a confidence score. The confidence scores can be used in the word correction process in various ways. For example, low confidence scores can be shown to the user, and manual correction can be performed.

Text recognizers and related frameworks described herein provide for a robust process in text extraction from documents of varying types, including typical print documents and technical documents. In comparison to current text recognition solutions, the implementations described herein enable text classification and extraction of overlapping characters. With the use of machine learning models at one or more steps in the process, the text recognizer can improve its performance over time, further enabling its efficacy in domain-specific implementations.

In some examples, the methods and processes described herein may be tied to a computing system of one or more computing devices. In particular, such methods and processes may be implemented as a computer-application program or service, an application-programming interface (API), a library, and/or other computerprogram product.

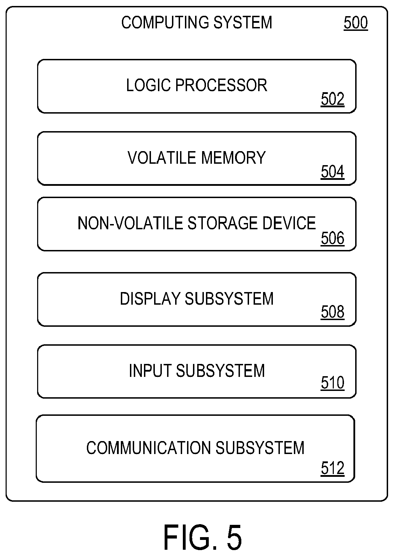

FIG. 5 schematically shows a non-limiting example of a computing system 500 that can enact one or more of the methods and processes described above. Computing system 500 is shown in simplified form. Computing system 500 may embody the computer device 102 described above and illustrated in FIG. 1. Computing system 500 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 500 includes a logic processor 502 volatile memory 504, and a non-volatile storage device 506. Computing system 500 may optionally include a display subsystem 508, input subsystem 510, communication subsystem 512, and/or other components not shown in FIG. 5.

Logic processor 502 includes one or more physical devices configured to execute instructions. For example, the logic processor 502 may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor 502 may include one or more physical processors (hardware) configured to execute software instructions. Additionally or alternatively, the logic processor 502 may include one or more hardware logic circuits or firmware devices configured to execute hardware-implemented logic or firmware instructions. Processors of the logic processor 502 may be single-core or multi-core, and the instructions executed thereon may be configured for sequential, parallel, and/or distributed processing. Individual components of the logic processor 502 optionally may be distributed among two or more separate devices, which may be remotely located and/or configured for coordinated processing. Aspects of the logic processor 502 may be virtualized and executed by remotely accessible, networked computing devices configured in a cloud-computing configuration. In such a case, these virtualized aspects are run on different physical logic processors of various different machines, it will be understood.

Non-volatile storage device 506 includes one or more physical devices configured to hold instructions executable by the logic processors to implement the methods and processes described herein. When such methods and processes are implemented, the state of non-volatile storage device 506 may be transformed-e.g., to hold different data.

Non-volatile storage device 506 may include physical devices that are removable and/or built in. Non-volatile storage device 506 may include optical memory (e.g., CD, DVD, HD-DVD, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 506 may include nonvolatile, dynamic, static, read/write, read-only, sequential-access, location-addressable, file-addressable, and/or contentaddressable devices. It will be appreciated that non-volatile storage device 506 is configured to hold instructions even when power is cut to the non-volatile storage device 506.

Volatile memory 504 may include physical devices that include random access memory. Volatile memory 504 is typically utilized by logic processor 502 to temporarily store information during processing of software instructions. It will be appreciated that volatile memory 504 typically does not continue to store instructions when power is cut to the volatile memory 504.

Aspects of logic processor 502, volatile memory 504, and non-volatile storage device 506 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), systemon-a-chip (SOC), and complex programmable logic devices (CPLDs), for example.

The terms "module," "program," and "engine" may be used to describe an aspect of computing system 500 typically implemented in software by a processor to perform a particular function using portions of volatile memory, which function involves transformative processing that specially configures the processor to perform the function. Thus, a module, program, or engine may be instantiated via logic processor 502 executing instructions held by non-volatile storage device 506, using portions of volatile memory 504. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 508 may be used to present a visual representation of data held by non-volatile storage device 506. The visual representation may take the form of a graphical user interface (GUI). As the herein described methods and processes change the data held by the non-volatile storage device, and thus transform the state of the non-volatile storage device, the state of display subsystem 508 may likewise be transformed to visually represent changes in the underlying data. Display subsystem 508 may include one or more display devices. Such display devices may be combined with logic processor 502, volatile memory 504, and/or non-volatile storage device 506 in a shared enclosure, or such display devices may be peripheral display devices.

When included, input subsystem 510 may comprise or interface with one or more user-input devices such as a keyboard, mouse, trackpad, touch sensitive display, camera, or microphone.

When included, communication subsystem 512 may be configured to communicatively couple various computing devices described herein with each other, and with other devices. Communication subsystem 512 may include wired and/or wireless communication devices compatible with one or more different communication protocols. As non-limiting examples, the communication subsystem may be configured for communication via a wireless cellular network, or a wired or wireless local- or widearea network. In some embodiments, the communication subsystem may allow computing system 500 to send and/or receive messages to and/or from other devices via a network such as the Internet.

Further, the disclosure comprises the following examples:
Clause 1. A computing device for text recognition, the computing device comprising: a processor coupled to a storage medium that stores instructions, which upon execution by the processor, cause the processor to: receive a data file comprising an image; identify at least one contour in the image; partition the at least one contour into a plurality of segments; and identify a text character in each segment of the plurality of segments.
Clause 2. The computing device of clause 1, wherein the instructions, upon execution by the processor further cause the processor to: append at least two of the identified text characters to form a word; perform word correction on the word to generate a corrected word; and output the corrected word.
Clause 3. The computing device of clause 2, wherein the at least two of the identified text characters are appended based on a predetermined spatial location difference threshold.
Clause 4. The computing device of clauses 1 to 3, wherein the at least one contour comprises a plurality of contours, and wherein the instructions, upon execution by the processor further cause the processor to filter the plurality of contours to remove a non-text contour in the plurality of contours.
Clause 5. The computing device of clauses 1 to 4, wherein identifying the at least one contour comprises determining a plurality of contiguous pixels, wherein each contiguous pixel is within a predetermined spatial distance threshold to another contiguous pixel, and wherein each contiguous pixel comprises a pixel value above a predetermined pixel value threshold.
Clause 6. The computing device of clauses 1 to 5, wherein partitioning the at least one contour comprises: determining a bounding box in which a contour in the at least one contour is inscribed; and dividing the bounding box.
Clause 7. The computing device of any one of clauses 1-6, wherein the bounding box is divided based on a predetermined pixel width value.
Clause 8. The computing device of claim clauses 1 to 7, wherein the at least one contour comprises a plurality of contours, and wherein partitioning the at least one contour comprises: determining a plurality of bounding boxes, wherein each contour of the plurality of contours is inscribed in a separate bounding box of the plurality of bounding boxes; and dividing each bounding box of the plurality of bounding boxes into a set of segments based on a predetermined pixel width value, wherein the predetermined pixel width value is determined based on a smallest width in the plurality of bounding boxes.
Clause 9. The computing device of claim clauses 1 to 8, wherein the text character is identified using a text classification machine learning model.
Clause 10. The computing device of any one of clauses 1-9, wherein the text classification machine learning model comprises a convolutional neural network.
Clause 11. A method for text recognition, the method comprising: receiving a data file comprising an image; identifying at least one contour in the image; partitioning the at least one contour into a plurality of segments; and identifying a text character in each segment of the plurality of segments.
Clause 12. The method of clause 11, further comprising: determining at least two identified text characters satisfying a predetermined spatial location difference threshold; appending the at least two identified text characters to form a word; performing word correction on the word to generate a corrected word; and outputting the corrected word.
Clause 13. The method of clause 11 or clause 12, wherein the at least one contour comprises a plurality of contours, and wherein the method further comprises filtering the plurality of contours to remove a non-text contour in the plurality of contours.
Clause 14. The method of clauses 11 to 13, wherein partitioning the at least one contour comprises: determining a bounding box in which a contour in the at least one contour is inscribed; and dividing the bounding box based on a predetermined pixel width value.
Clause 15. The method of clauses 11 to 14, wherein the text character is identified using a text classification convolutional neural network.
Clause 16. A computing device for text recognition, the computing device comprising: a processor coupled to a storage medium that stores instructions, which upon execution by the processor, cause the processor to: receive a data file comprising an image; identify a plurality of contours in the image; filter the plurality of contours to remove contours corresponding to non-text portions of the image; partition each of the remaining contours in the plurality of contours into one or more segments; identify a text character in each partitioned segment using a text classification machine learning model; and output the identified text characters.
Clause 17. The computing device of clause 16, wherein the instructions, upon execution by the processor further cause the processor to: determine at least two identified text characters satisfying a predetermined spatial location difference threshold; append the at least two identified text characters to form a word; perform word correction on the word to generate a corrected word; and output the corrected word.
Clause 18. The computing device of clause 16 or clause 17, wherein the plurality of contours is filtered using a text classification machine learning model.
Clause 19. The computing device of clauses 16 to 18, wherein partitioning each of the remaining contours comprises: determining a bounding box in which a contour in the remaining contours is inscribed; and dividing the bounding box based on a predetermined pixel width value.
Clause 20. The computing device of clauses 16 to 19, wherein the text character is identified using a text classification convolutional neural network.
Clause 21. The computing device or method of anyone of the preceding claims further including extracting the text character from image into a machine-readable format, and editing, searched, or manipulating the extracted text.

## Claims

1. A computing device (102) for text recognition, the computing device (102) comprising:
a processor (104) coupled to a storage medium that stores instructions, which upon execution by the processor (104), cause the processor (104) to:
receive a data file comprising an image (114);
identify at least one contour (118) in the image (114);
partition the at least one contour (118) into a plurality of segments (122); and
identify a text character (126) in each segment of the plurality of segments (122).

2. The computing device (102) of claim 1, wherein the instructions, upon execution by the processor (104) further cause the processor (104) to:
append at least two of the identified text characters (126) to form a word;
perform word correction (214) on the word to generate a corrected word; and
output the corrected word; and optionally
wherein the at least two of the identified text characters (126) are appended based on a predetermined spatial location difference threshold.

3. The computing device (102) of any one of claims 1-2, wherein the at least one contour (118) comprises a plurality of contours (118), and wherein the instructions, upon execution by the processor (104) further cause the processor (104) to filter the plurality of contours (118) to remove a non-text contour in the plurality of contours (118); and/or optionally
wherein identifying the at least one contour (118) comprises determining a plurality of contiguous pixels, wherein each contiguous pixel is within a predetermined spatial distance threshold to another contiguous pixel, and wherein each contiguous pixel comprises a pixel value above a predetermined pixel value threshold.

4. The computing device (102) of any one of claims 1-3, wherein partitioning the at least one contour (118) comprises:
determining a bounding box (308) in which a contour (118) in the at least one contour (118) is inscribed; and
dividing the bounding box (308); and optionally
wherein the bounding box (308) is divided based on a predetermined pixel width value.

5. The computing device (102) of any one of claims 1-4, wherein the at least one contour (118) comprises a plurality of contours (118), and wherein partitioning the at least one contour (118) comprises:
determining a plurality of bounding boxes (308), wherein each contour (118) of the plurality of contours (118) is inscribed in a separate bounding box (308) of the plurality of bounding boxes (308); and
dividing each bounding box (308) of the plurality of bounding boxes (308) into a set of segments based on a predetermined pixel width value, wherein the predetermined pixel width value is determined based on a smallest width in the plurality of bounding boxes (308).

6. The computing device (102) of any one of claims 1-5, wherein the text character (126) is identified using a text classification machine learning model; and optionally
wherein the text classification machine learning model comprises a convolutional neural network.

7. A method (400) for text recognition, the method (400) comprising:
receiving (402) a data file comprising an image (114);
identifying (404) at least one contour (118) in the image (114);
partitioning (408) the at least one contour (118) into a plurality of segments (122); and
identifying (410) a text character (126) in each segment of the plurality of segments (122).

8. The method (400) of claim 7, further comprising:
determining at least two identified text characters (126) satisfying a predetermined spatial location difference threshold;
appending (412) the at least two identified text characters (126) to form a word;
performing (414) word correction (214) on the word to generate a corrected word; and
outputting the corrected word.

9. The method (400) of claim 7 or 8, wherein the at least one contour (118) comprises a plurality of contours (118), and wherein the method further comprises filtering the plurality of contours (118) to remove a non-text contour in the plurality of contours (118).

10. The method (400) of any one of claims 7 or 9, wherein partitioning (408) the at least one contour (118) comprises:
determining a bounding box (308) in which a contour (118) in the at least one contour (118) is inscribed; and
dividing the bounding box (308) based on a predetermined pixel width value.

11. The method (400) of any one of claims 7-10, wherein the text character (126) is identified (410) using a text classification convolutional neural network.

12. A computing device (102) for text recognition, the computing device (102) comprising:
a processor (104) coupled to a storage medium that stores instructions, which upon execution by the processor (104), cause the processor (104) to:
receive a data file comprising an image (114);
identify a plurality of contours (118) in the image (114);
filter the plurality of contours (118) to remove contours corresponding to non-text portions of the image (114);
partition each of the remaining contours (118) in the plurality of contours (118) into one or more segments (122);
identify a text character (126) in each partitioned segment (122) using a text classification machine learning model; and
output the identified text characters (126).

13. The computing device (102) of claim 12, wherein the instructions, upon execution by the processor (104) further cause the processor (104) to:
determine at least two identified text characters (126) satisfying a predetermined spatial location difference threshold;
append the at least two identified text characters (126) to form a word;
perform word correction (214) on the word to generate a corrected word; and
output the corrected word.

14. The computing device (102) of claim 12 or 13, wherein the plurality of contours (118) is filtered using a text classification machine learning model.

15. The computing device (102) of any one of claims 12-14, wherein partitioning each of the remaining contours (118) comprises:
determining a bounding box (308) in which a contour (118) in the remaining contours (118) is inscribed; and
dividing the bounding box (308) based on a predetermined pixel width value; and/or optionally
wherein the text character (126) is identified using a text classification convolutional neural network.
